# FASCICULE DE BREVET EUROPEEN

(11) **EP 3 429 896 B1**
(45) Date de publication et mention de la délivrance du brevet: **07.07.2021**
(21) Numéro de dépôt: 17708826.7
(22) Date de dépôt: 08.03.2017
(51) Int. Cl.: B60S 1/52, B60S 1/56

(54) **DISPOSITIF DE NETTOYAGE D'UN SYSTEME DE DETECTION OPTIQUE POUR VEHICULE AUTOMOBILE**
VORRICHTUNG ZUR REINIGUNG EINES OPTISCHES DETEKTIONSSYSTEMS FÜR EIN KRAFTFAHRZEUG
DEVICE FOR CLEANING AN OPTICAL DETECTION SYSTEM FOR A MOTOR VEHICLE

(30) Priorité: 14.03.2016 FR 1652128
(43) Date de publication de la demande: 23.01.2019
(73) Titulaire: Valeo Systèmes d'Essuyage, 78322 Le Mesnil Saint Denis (FR)
(72) Inventeur: GIRAUD, Frédéric, 78322 La Verrière (FR); TREBOUET, Marcel, 78322 La Verrière (FR)
(74) Mandataire: Valeo Vision
(86) Numéro de dépôt international: PCT/EP2017/055455
(87) Numéro de publication internationale: WO 2017/157739

(56) Documents cités:
- EP-A1- 2 949 520
- WO-A1-2015/120866
- DE-A1-102005 021 671

## Description

La présente invention se rapporte au domaine des systèmes de détection optique utilisés pour l'aide à la conduite des véhicules automobiles, et elle concerne plus particulièrement les dispositifs de nettoyage des capteurs de ces systèmes.

Un dispositif de nettoyage de capteurs d'un système de détection optique est connu du document EP2949520.

Des systèmes de détection optique équipent un nombre de plus en plus grand de véhicules automobiles afin d'aider le conducteur du véhicule dans certaines situations de conduite, comme par exemple, l'aide au stationnement au moyen d'une caméra de prise de vues ou d'un radar de type infrarouge. Pour que ces dispositifs d'aide à la conduite soient le plus efficace possible, il est indispensable que les capteurs optiques de ces systèmes de détection soient propres, qu'il s'agisse de la lentille d'une caméra ou d'un autre type de capteur optique, et par exemple des capteurs laser (communément appelés LIDAR) ou autres capteurs basés sur l'émission et/ou la détection de la lumière dans le spectre visible ou invisible pour l'Homme, en particulier l'infrarouge.

Il est connu de placer, au voisinage de ces capteurs optiques, un dispositif de nettoyage apte à projeter une quantité déterminée de liquide de nettoyage sur le capteur optique associé juste avant que soit réalisée la prise de vue ou la détection. Et, afin d'éviter tout risque de pollution du capteur considéré par d'éventuelles traces qu'un tel liquide de nettoyage pourrait laisser (gouttes, coulures, etc ...), il est également connu de procéder à la projection, après celle du fluide de nettoyage, d'un fluide de séchage, notamment de l'air, qui permet de débarrasser le capteur optique du liquide de nettoyage et des salissures résiduelles que celui-ci entraîne alors avec lui. On comprend que ces dispositifs de nettoyage ne doivent toutefois pas gêner le fonctionnement du capteur en trouvant dans le champ de vision du capteur lorsque celui-ci est en fonctionnement.

Pour cela, les éléments permettant la distribution des fluides de nettoyage et/ou de séchage sont généralement aptes à être déplacés entre une position de travail dans laquelle ils viennent se placer sensiblement en avant du capteur optique pour en assurer le nettoyage, et une position de repos dans laquelle ils sont rétractés par rapport au capteur pour ne pas gêner son fonctionnement. Par ailleurs, ces dispositifs doivent être le plus compact possible pour répondre aux contraintes d'encombrement au sein de l'espace restreint du véhicule dans lequel est accueilli le dispositif d'aide à la conduite.

La présente invention a pour but de proposer une solution qui permette de faciliter l'implantation d'un tel ensemble de détection optique et du dispositif associé de nettoyage de son capteur optique, et qui permette un pilotage simple de ce dispositif de nettoyage entre les positions de travail et de repos.

Dans ce but, l'invention propose un dispositif de nettoyage d'un capteur optique d'un système de détection optique pour véhicule automobile, qui comprend un ensemble d'acheminement et de distribution d'un fluide de nettoyage et d'un fluide de séchage. Selon l'invention, le dispositif de nettoyage comporte des moyens motorisés électriques pour déplacer selon un mouvement linéaire cet ensemble d'acheminement et de distribution de fluides entre une position de travail, dans laquelle les fluides peuvent être distribués sur une surface extérieure du capteur optique et une position de repos.

Les moyens motorisés électriques présentent en sortie un arbre d'entraînement rendu solidaire de l'ensemble d'acheminent et de distribution de fluides, ledit arbre d'entraînement étant déplacé linéairement et donc susceptible de transmettre à l'ensemble d'acheminement et de distribution ce mouvement de translation généré par les moyens motorisés électriques. Selon différents modes de réalisation, on pourra prévoir que les moyens motorisés électriques consistent soit en un actionneur linéaire, ledit arbre d'entraînement consistant alors en une tige de sortie de l'actionneur directement translaté, soit en un moteur rotatif, ledit arbre d'entraînement consistant alors en une crémaillère actionnée par un pignon solidaire d'un rotor dudit moteur.

On pourra prévoir une série de caractéristiques, prises seules ou en combinaison, propres à la configuration d'un dispositif de nettoyage dans lequel l'ensemble d'acheminement et de distribution de fluides, qui comprend au moins un embout de raccordement pour l'alimentation de chacun des fluides et des conduites de distribution vers une ou plusieurs buses de projection de ces fluides, est accueilli dans un boîtier configuré pour coopérer avec l'arbre d'entraînement.

Ce boîtier pourra notamment comporter une zone de fixation de l'arbre d'entraînement, une partie de distribution, porteuse d'au moins une buse de projection de fluide, et une partie d'alimentation, porteuse d'au moins un embout de raccordement et d'au moins une conduite de distribution.

La zone de fixation pourra former une extension du boîtier décalée par rapport au passage de la au moins une conduite de distribution, et notamment décalée du même côté du boîtier que le côté sur lequel est agencée la au moins une buse de projection de fluide.

Selon des caractéristiques de l'invention relatives à cette zone de fixation, celle-ci peut présenter une encoche de formes et de dimensions correspondantes à celles de la section de l'arbre d'entrainement. L'encoche peut être borgne, et elle peut être de forme rectangulaire correspondante à une forme rectangulaire de la section de l'arbre d'entrainement.

Selon différents modes de réalisation de l'invention, ce moteur électrique peut être un moteur à sortie linéaire, ou un moteur à sortie rotative dans laquelle l'arbre de sortie est lié à une crémaillère, transformant ainsi le mouvement de rotation de l'arbre de sortie du moteur en un mouvement linéaire.

On comprend que le mouvement linéaire qui permet d'amener l'ensemble d'acheminement et de distribution en position de travail, pour que les buses de projection des fluides de nettoyage et/ou de séchage soient en regard du capteur optique à nettoyer, peut être dirigé selon différentes directions au regard du véhicule, sans que cela modifie le fonctionnement du dispositif de nettoyage selon l'invention.

Les moyens motorisés électrique peuvent comprendre un moteur pas à pas, qui est commandé pour générer un déplacement uniquement sur la distance entre la position de travail et la position de repos, ou bien ils peuvent comprendre un moteur continu, des butées de fin de déplacement étant prévues pour correspondre aux positions de travail et de repos de l'ensemble d'acheminent et de distribution de fluides.

L'invention concerne également un système de détection optique pour véhicule automobile, comprenant au moins un capteur optique, et un dispositif de nettoyage de ce capteur tel qu'il vient d'être présenté.

D'autres caractéristiques, détails et avantages de l'invention ressortiront plus clairement à la lecture de la description donnée ci-après à titre indicatif, en relation avec les figures annexées, dans lesquelles :
- les figures 1 et 2 sont des représentations schématiques de côté d'un système de détection optique et d'un dispositif de nettoyage associé selon un mode de réalisation de l'invention, le dispositif de nettoyage étant illustré dans une position de travail (figure 1) et dans une position de repos (figure 2) ;
- la figure 3 est une vue de côté, à l'opposé de l'angle de vue des figures 1 et 2, d'un ensemble d'acheminement et d'injection de fluide de nettoyage et/ou de séchage du dispositif de nettoyage illustré sur la figure 1 ;
- et la figure 4 est une vue de dessus de d'acheminement et d'injection de fluide de nettoyage et/ou de séchage du dispositif de nettoyage illustré sur la figure 3.

Il faut tout d'abord noter que si les figures exposent l'invention de manière détaillée pour sa mise en oeuvre, elles peuvent bien entendu servir à mieux définir l'invention le cas échéant.

Par ailleurs, l'invention sera décrite dans ce qui suit dans son application à un système de détection optique comprenant une caméra de prise de vues équipée d'une lentille. Ainsi qu'il a été indiqué précédemment, l'invention ne se limite toutefois pas à cette application, et s'étend à tout système de détection optique du véhicule mettant en oeuvre au moins un capteur optique tel que, à titre d'exemples non exhaustifs : capteurs laser, capteurs basés sur l'émission et/ou la détection de rayonnement dans le spectre visible ou invisible.

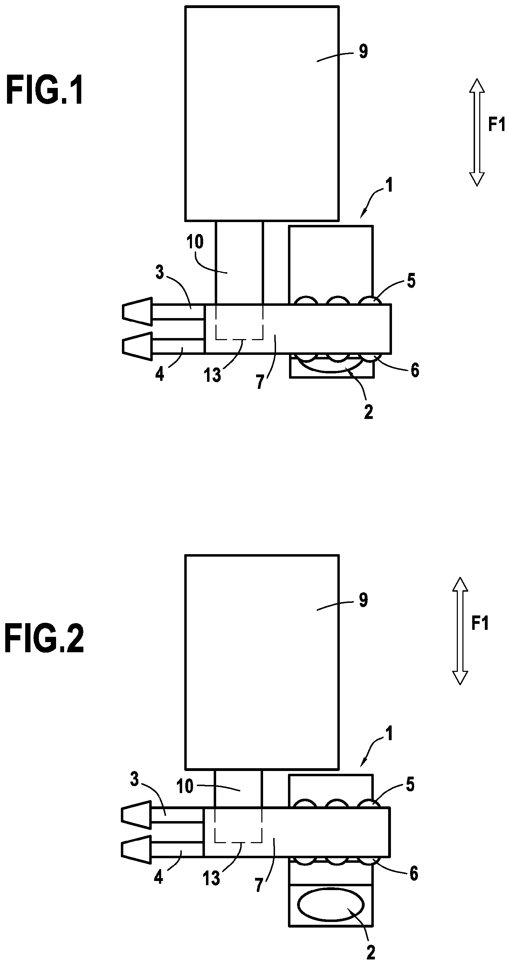

Les figures 1 et 2 illustrent schématiquement un système de détection optique associé à un dispositif de nettoyage réalisé selon un premier mode de réalisation de l'invention, le système de détection optique comportant ici une caméra 1 équipée d'une lentille 2.

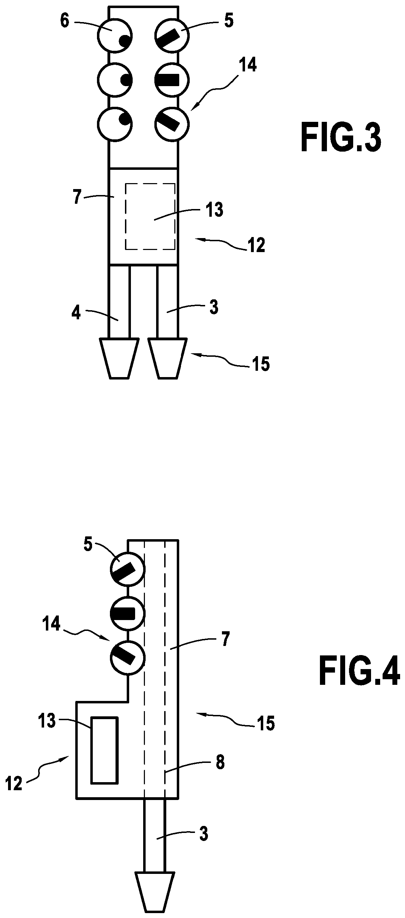

A ce système de détection optique est associé un dispositif de nettoyage de la lentille 2, formé notamment par un ensemble d'acheminement et de distribution d'un fluide de nettoyage et d'un fluide de séchage. Plus particulièrement, cet ensemble d'acheminement et de distribution présente des embouts de raccordement 3 et 4 à des tuyaux d'alimentation ici non représentés, respectivement pour l'acheminement d'un liquide de nettoyage depuis un réservoir de stockage non représenté, et pour l'acheminement d'un fluide de séchage, et il présente un ensemble de premières buses de projection 5, pour la projection du liquide de nettoyage, et un ensemble de deuxièmes buses de projection 6, pour la projection d'un fluide de séchage. Liquide de nettoyage et fluide de séchage circulent à l'intérieur d'un boîtier 7 de l'ensemble d'acheminement et de distribution, dans des conduites de distribution 8 venant alimenter les buses, les conduites étant représentées en traits pointillés sur la figure 4. Les buses de projection 5 et 6 sont aménagées au voisinage les unes des autres sur une même face du boîtier, à une première extrémité longitudinale de celui-ci, opposée à la deuxième extrémité longitudinale où s'étendent les embouts de raccordement 3 et 4.

Le boîtier 7 est rendu mobile pour se déplacer entre une position de travail, plus particulièrement illustrée sur la figure 1, dans laquelle les fluides projetés par les buses de projection 5 et 6 sont aptes à atteindre une surface extérieure de la lentille 2, et une position de repos, illustrée sur la figure 2, dans laquelle les buses de projection sont en retrait par rapport à la lentille 2 et dans laquelle le boîtier 7 peut avantageusement être escamoté dans un élément de carrosserie du véhicule. On comprend qu'aucun fluide n'est projeté en direction de la lentille lorsque le boîtier 7, et les buses de projection associés 5 et 6, sont dans leur position de repos, notamment lorsque cette position de repos est une position escamotée dans la carrosserie du véhicule.

Selon l'invention, le mouvement du boîtier 7 et le mouvement de l'ensemble d'acheminement et de distribution constitué des embouts de raccordement 3 et 4, des buses de projection 5 et 6 et des conduites de distribution 8, est un mouvement linéaire obtenu par des moyens motorisés électriques 9. Tel qu'illustré sur les figures 1 et 2, le passage du boîtier 7 et de l'ensemble d'acheminement et de distribution associé, d'une position de travail à une position de repos, se fait par un mouvement de translation, en rapprochement ou en éloignement des moyens motorisés électriques. On limite ainsi la place nécessaire autour du dispositif de nettoyage pour qu'il puisse passer de sa position active à sa position de repos.

Les moyens motorisés électriques 9 sont pilotés par un dispositif de commande, qui envoie une instruction de mise en route des moyens motorisés électriques lorsqu'une information relative à l'utilisation du système de détection optique est reçue, que cette utilisation soit une utilisation à venir, ou une utilisation passée. En d'autres termes, une information d'imminence d'utilisation du système de détection optique, du type arrêt du véhicule et passage de la vitesse correspondant à la marche arrière, ou une information de fin d'utilisation du système de détection optique, peuvent déclencher une mise en oeuvre des moyens motorisés pour réaliser un nettoyage du capteur optique, avant ou après son utilisation. Sans instruction de mise en oeuvre, l'ensemble d'acheminement et de distribution des fluides de nettoyage et de séchage reste dans une position de repos, et les moyens motorisés électriques ne sont pas alimentés. Il en résulte un besoin énergétique limité pour cette fonction puisque les opérations de nettoyage sont épisodiques et rapides.

On comprend que l'utilisation selon la présente invention de systèmes électriques permet de faciliter la détection du blocage du système, notamment en cas de gel. Le système de commande associé peut ainsi simultanément couper l'alimentation des systèmes mis en oeuvre, à savoir le moyen motorisé mais aussi la pompe par exemple, ce qui présente l'avantage de ne pas forcer sur les pièces du système.

Différentes variantes de réalisation peuvent être mises en oeuvre dans le cadre de l'utilisation selon l'invention de moyens motorisés électriques générant un mouvement linéaire de l'ensemble d'acheminement et de distribution associé.

Des variantes peuvent notamment porter sur le type de moteur. On pourra indifféremment mettre en oeuvre un moteur électrique rotatif ou un moteur électrique linéaire, dès lors que l'arbre d'entraînement 10, en sortie des moyens motorisés électriques 9, connaît un mouvement linéaire qu'il sait transmettre au boîtier 7. Dans le cas d'un moteur électrique linéaire, le boîtier est directement monté sur l'arbre de sortie, tandis que dans le cas d'un moteur électrique rotatif, le boîtier est monté sur une crémaillère qui forme l'arbre d'entraînement, dont le mouvement est rendu linéaire par une liaison dentée avec une tige liée au rotor du moteur.

D'autres variantes peuvent porter sur le mode de fonctionnement du moteur et notamment son cadencement. Plus précisément, le mouvement linéaire peut être avantageusement obtenu par un moteur électrique du type pas à pas. Un tel moteur est dimensionné pour produire un déplacement déterminé de l'arbre d'entraînement en sortie du moteur, entre deux positions extrêmes, étant compris qu'une première position extrême de l'arbre d'entrainement correspond à la position de repos de l'ensemble d'acheminent et de distribution de fluides 3, 4, 5, 6, 7, 8, et qu'une deuxième position extrême de l'arbre d'entraînement correspond à la position de travail de cet ensemble. On pourra prévoir en variante de réalisation un moteur continu, associé des butées de fin de déplacement qui envoie une information de fin de course au module de commande du moteur électrique afin d'en stopper l'alimentation.

Dans chacun de ces cas, le mouvement linéaire du boîtier 7 est généré par le déplacement linéaire de l'arbre d'entraînement 10, le long de la flèche F1 illustrée sur les figures 1 et 2.

Selon une caractéristique avantageuse de l'invention, le boîtier 7 est directement fixé sur l'arbre d'entraînement 10 coulissant en sortie du moteur électrique 9. A cet effet, le boîtier 7 comporte une zone de fixation 12 portant une encoche 13 de formes et de dimensions correspondantes à celles de la section de l'arbre d'entrainement 10. Notamment, cette encoche 13 peut prendre une forme rectangulaire, dans laquelle est logé l'arbre d'entrainement de section rectangulaire également, ce qui permet d'interdire une rotation relative du boîtier par rapport à l'arbre d'entraînement autour de l'axe de coulissement de cet arbre.

On pourra noter plus particulièrement que le boîtier comporte plusieurs parties distinctes parmi lesquelles une première partie de distribution 14, porteuse des buses de projection 5 et 6, une deuxième partie correspondant à la zone de fixation 12, et une troisième partie d'alimentation 15 porteuse des embouts de raccordement 3 et 4 et des conduites de distribution 8 représentées en traits pointillés sur la figure 4.

La zone de fixation 12 forme une extension décalée par rapport au passage des conduites de distribution de fluides, et ici notamment décalée du même côté du boîtier 7 que le côté sur lequel sont agencées les buses de projection de fluides, respectivement 5 et 6, sur ce boîtier. Ainsi, le flux de fluides dans les conduites de distribution 8, en provenance des embouts de raccordement 3 et 4, n'est pas perturbé par la présence de l'encoche 13 de la zone de fixation 12 et par la présence éventuelle de l'arbre d'entraînement 10 dans cette encoche. Il est, bien sûr, à noter qu'un tel mode de réalisation n'est pas exclusif : d'une manière générale, l'invention prévoit que la fixation du boîtier 7 avec l'arbre d'entraînement en sortie du moteur électrique 9 qui assure le mouvement linéaire de cet ensemble (qu'il s'agisse d'un arbre de sortie linéaire ou d'une crémaillère associée à un arbre de sortie rotatif) soit définie de telle manière qu'elle n'entraîne aucune perturbation du flux de ces fluides.

L'arbre peut être emmanché ou fixé par vissage, dans cette encoche 13, ici représentée borgne. On pourrait prévoir une ouverture traversante en lieu et place d'une encoche, et prévoir là encore des moyens de fixation adéquates pour transmettre au boîtier 7 le mouvement linéaire de l'arbre d'entrainement.

Telle qu'elle vient d'être décrite, l'invention permet, par des moyens simples, de réaliser un dispositif compact, et efficace dans le positionnement du dispositif de nettoyage d'un capteur optique d'un système de détection optique installé sur un véhicule automobile.

Ainsi qu'il a été mentionné précédemment, si l'invention a été ici décrite et illustrée dans son application à un ensemble optique mettant en œuvre une caméra de prise de vues, elle ne saurait se limiter à cette application, et elle s'étend à tout ensemble de détection mettant en oeuvre un capteur optique.

## Revendications

1. Dispositif de nettoyage d'un capteur optique d'un système de détection optique pour véhicule automobile, qui comprend un ensemble d'acheminement et de distribution d'un fluide de nettoyage et d'un fluide de séchage (3, 4, 5, 6, 7, 8) et des moyens motorisés électriques (9) pour déplacer cet ensemble d'acheminement et de distribution de fluides entre une position de travail dans laquelle les fluides peuvent être distribués sur une surface extérieure du capteur optique (2) et une position de repos, **caractérisé en ce que** les moyens motorisés électriques (9) pour déplacer cet ensemble d'acheminement et de distribution de fluides sont des moyens motorisés électriques (9) pour déplacer cet ensemble d'acheminement et de distribution de fluides selon un mouvement linéaire et **en ce que** les moyens motorisés électriques (9) présentent en sortie un arbre d'entraînement (10) rendu solidaire de l'ensemble d'acheminent et de distribution de fluides (3, 4, 5, 6, 7, 8), ledit arbre d'entraînement étant déplacé linéairement.

2. Dispositif selon la revendication 1, **caractérisé en ce que** les moyens motorisés électriques (9) consistent en un actionneur linéaire, ledit arbre d'entraînement (10) consistant en une tige de sortie de l'actionneur.

3. Dispositif selon la revendication 1, **caractérisé en ce que** les moyens motorisés électriques (9) consistent en un moteur rotatif, ledit arbre d'entraînement (10) consistant en une crémaillère actionnée par une tige solidaire d'un rotor dudit moteur.

4. Dispositif selon l'une des revendications précédentes, **caractérisé en ce que** l'ensemble d'acheminement et de distribution de fluides, qui comprend au moins un embout de raccordement (3, 4) pour l'alimentation de chacun des fluides et des conduites de distribution vers une ou plusieurs buses de projection (5, 6) de ces fluides, est accueilli dans un boîtier (7) qui est configuré pour coopérer avec l'arbre d'entraînement (10).

5. Dispositif selon la revendication précédente, **caractérisé en ce que** le boîtier (7) comporte une zone de fixation (12) de l'arbre d'entraînement (10), une partie de distribution (14), porteuse d'au moins une buse de projection de fluide (5, 6), et une partie d'alimentation (15), porteuse d'au moins un embout de raccordement (3, 4) et d'au moins une conduite de distribution (8).

6. Dispositif selon la revendication 5, **caractérisé en ce que** la zone de fixation (12) forme une extension du boîtier décalée par rapport au passage de la au moins une conduite de distribution (8).

7. Dispositif selon la revendication 6, **caractérisé en ce que** la zone de fixation (12) est décalée du même côté du boîtier (7) que le côté sur lequel est agencée la au moins une buse de projection de fluide (5, 6).

8. Dispositif selon l'une des revendications 5 à 7, **caractérisé en ce que** la zone de fixation (12) présente une encoche (13) de formes et de dimensions correspondantes à celles de la section de l'arbre d'entrainement (10).

9. Dispositif selon la revendication précédente, **caractérisé en ce que** l'encoche (13) est borgne.

10. Dispositif selon l'une des revendications 8 ou 9, **caractérisé en ce que** l'encoche (13) est de forme rectangulaire correspondante à une forme rectangulaire de la section de l'arbre d'entrainement (10).

11. Dispositif selon l'une des revendications précédentes, **caractérisé en ce que** les moyens motorisés électrique (9) comprennent un moteur pas à pas.

12. Dispositif selon l'une des revendications 1 à 10, **caractérisé en ce que** les moyens motorisés électrique (9) comprennent un moteur continu, des butées de fin de déplacement étant prévues pour correspondre aux positions de travail et de repos de l'ensemble d'acheminent et de distribution de fluides (3, 4, 5, 6, 7, 8).

13. Système de détection optique pour véhicule automobile, comprenant au moins un capteur optique (2), **caractérisé en ce que** qu'il comporte un dispositif de nettoyage de ce capteur selon l'une ou l'autre des revendications précédentes.

## Patentansprüche

1. Vorrichtung zur Reinigung eines optischen Sensors eines optischen Erfassungssystems für ein Kraftfahrzeug, die eine Beförderungs- und Verteilungseinheit eines Reinigungsfluids und eines Trocknungsfluids (3, 4, 5, 6, 7, 8) und elektrische motorisierte Einrichtungen (9) enthält, um diese Beförderungs- und Verteilungseinheit von Fluiden zwischen einer Arbeitsstellung, in der die Fluide auf einer Außenfläche des optischen Sensors (2) verteilt werden können, und einer Ruhestellung zu verschieben, **dadurch gekennzeichnet, dass** die elektrischen motorisierten Einrichtungen (9) zur Verschiebung dieser Beförderungs- und Verteilungseinheit von Fluiden elektrische motorisierte Einrichtungen (9) zur Verschiebung dieser Beförderungs- und Verteilungseinheit von Fluiden gemäß einer linearen Bewegung sind, und dass die elektrischen motorisierten Einrichtungen (9) am Ausgang eine Antriebswelle (10) aufweisen, die fest mit der Beförderungs- und Verteilungseinheit von Fluiden (3, 4, 5, 6, 7, 8) verbunden ist, wobei die Antriebswelle linear verschoben wird.

2. Vorrichtung nach Anspruch 1, **dadurch gekennzeichnet, dass** die elektrischen motorisierten Einrichtungen (9) aus einem linearen Stellantrieb bestehen, wobei die Antriebswelle (10) aus einer Ausgangsstange des Stellantriebs besteht.

3. Vorrichtung nach Anspruch 1, **dadurch gekennzeichnet, dass** die elektrischen motorisierten Einrichtungen (9) aus einem Rotationsmotor bestehen, wobei die Antriebswelle (10) aus einer Zahnstange besteht, die von einer fest mit einem Rotor des Motors verbundenen Stange betätigt wird.

4. Vorrichtung nach einem der vorhergehenden Ansprüche, **dadurch gekennzeichnet, dass** die Beförderungs- und Verteilungseinheit von Fluiden, die mindestens einen Anschlussstutzen (3, 4) zur Zufuhr jedes der Fluide und Verteilungsleitungen zu einer oder mehreren Spritzdüsen (5, 6) dieser Fluide enthält, in einem Gehäuse (7) aufgenommen wird, das konfiguriert ist, mit der Antriebswelle (10) zusammenzuwirken.

5. Vorrichtung nach dem vorhergehenden Anspruch, **dadurch gekennzeichnet, dass** das Gehäuse (7) einen Befestigungsbereich (12) der Antriebswelle (10), einen Verteilungsteil (14), der mindestens eine Fluidspritzdüse (5, 6) trägt, und einen Zufuhrteil (15) aufweist, der mindestens einen Anschlussstutzen (3, 4) und mindestens eine Verteilungsleitung (8) trägt.

6. Vorrichtung nach Anspruch 5, **dadurch gekennzeichnet, dass** der Befestigungsbereich (12) eine Erweiterung des Gehäuses bildet, die bezüglich des Durchgangs der mindestens einen Verteilungsleitung (8) versetzt ist.

7. Vorrichtung nach Anspruch 6, **dadurch gekennzeichnet, dass** der Befestigungsbereich (12) auf der gleichen Seite des Gehäuses (7) versetzt ist wie die Seite, auf der die mindestens eine Fluidspritzdüse (5, 6) angeordnet ist.

8. Vorrichtung nach einem der Ansprüche 5 bis 7, **dadurch gekennzeichnet, dass** der Befestigungsbereich (12) eine Kerbe (13) mit Formen und Abmessungen entsprechend denjenigen des Querschnitts der Antriebswelle (10) aufweist.

9. Vorrichtung nach dem vorhergehenden Anspruch, **dadurch gekennzeichnet, dass** die Kerbe (13) einseitig offen ist.

10. Vorrichtung nach einem der Ansprüche 8 oder 9, **dadurch gekennzeichnet, dass** die Kerbe (13) eine rechtwinklige Form entsprechend einer rechtwinkligen Form des Querschnitts der Antriebswelle (10) hat.

11. Vorrichtung nach einem der vorhergehenden Ansprüche, **dadurch gekennzeichnet, dass** die elektrischen motorisierten Einrichtungen (9) einen Schrittschaltmotor enthalten.

12. Vorrichtung nach einem der Ansprüche 1 bis 10, **dadurch gekennzeichnet, dass** die elektrischen motorisierten Einrichtungen (9) einen Gleichstrommotor enthalten, wobei Verschiebungsendanschläge vorgesehen sind, um den Arbeits- und Ruhestellungen der Beförderungs- und Verteilungseinheit von Fluiden (3, 4, 5, 6, 7, 8) zu entsprechen.

13. Optisches Erfassungssystem für ein Kraftfahrzeug, das mindestens einen optischen Sensor (2) enthält, **dadurch gekennzeichnet, dass** es eine Vorrichtung zur Reinigung dieses Sensors nach dem einen oder anderen der vorhergehenden Ansprüche aufweist.

## Claims

1. Device for cleaning an optical sensor of an optical detection system for a motor vehicle, which comprises an assembly for guiding and distributing a cleaning fluid and a drying fluid (3, 4, 5, 6, 7, 8), and electric motor-driven means (9) for moving this fluid guiding and distributing assembly between a working position in which the fluids can be distributed over an exterior surface of the optical sensor (2) and an idle position, **characterized in that** the electric motor-driven means (9) for moving this fluid guiding and distributing assembly are electric motor-driven means (9) for moving this fluid guiding and distributing assembly in a linear motion and **in that** the electric motor-driven means (9) have an output drive shaft (10) fastened to the fluid guiding and distributing assembly (3, 4, 5, 6, 7, 8), said drive shaft being moved linearly.

2. Device according to Claim 1, **characterized in that** the electric motor-driven means (9) consist of a linear actuator, said drive shaft (10) consisting of an output rod of the actuator.

3. Device according to Claim 1, **characterized in that** the electric motor-driven means (9) consist of a rotary motor, said drive shaft (10) consisting of a rack actuated by a rod fastened to a rotor of said motor.

4. Device according to one of the preceding claims, **characterized in that** the fluid guiding and distributing assembly, which comprises at least one connecting end-piece (3, 4) for feeding each of the fluids and distribution pipes to one or more nozzles (5, 6) for spraying these fluids, is accommodated in a casing (7) that is configured to cooperate with the drive shaft (10).

5. Device according to the preceding claim, **characterized in that** the casing (7) includes a zone (12) for fixing the drive shaft (10), a distribution part (14), carrying at least one fluid spray nozzle (5, 6), and a supply part (15), carrying at least one connection end-piece (3, 4) and at least one distribution pipe (8).

6. Device according to Claim 5, **characterized in that** the fixing zone (12) forms an extension of the casing offset relative to the passage for the at least one distribution pipe (8).

7. Device according to Claim 6, **characterized in that** the fixing zone (12) is offset on the side of the casing (7) on which is arranged the at least one fluid spray nozzle (5, 6).

8. Device according to any one of Claims 5 to 7, **characterized in that** the fixing zone (12) includes a notch (13) with shapes and dimensions corresponding to those of the section of the drive shaft (10).

9. Device according to the preceding claim, **characterized in that** the notch (13) is a blind notch.

10. Device according to either one of Claims 8 or 9, **characterized in that** the notch (13) is of rectangular shape corresponding to a rectangular shape of the section of the drive shaft (10).

11. Device according to one of the preceding claims, **characterized in that** the electric motor-driven means (9) comprise a stepper motor.

12. Device according to one of Claims 1 to 10, **characterized in that** the electric motor-driven means (9) comprise a DC motor, end of travel stops being provided to correspond to the working and idle positions of the fluid guiding and distributing assembly (3, 4, 5, 6, 7, 8).

13. Optical detection system for motor vehicles, comprising at least one optical sensor (2), **characterized in that** it includes a device according to any one of the preceding claims for cleaning that sensor.
